# EUROPÄISCHE PATENTSCHRIFT

(11) **EP 1 158 236 B1**
(45) Veröffentlichungstag und Bekanntmachung des Hinweises auf die Patenterteilung: **14.02.2007**
(21) Anmeldenummer: 01108712.9
(22) Anmeldetag: 06.04.2001
(51) Int. Cl.: F16L 37/14

(54) **Kupplungsvorrichtung mit einem U-förmigen Verriegelungselement**
Coupling device having a U-shaped locking member
Dispositif d'accouplement avec un élément de verrouillage en forme de U

(30) Priorität: 17.05.2000 DE 10024303
(43) Veröffentlichungstag der Anmeldung: 28.11.2001
(73) Patentinhaber: Rasmussen GmbH, 63477 Maintal (DE)
(72) Erfinder: Bahner, Frank, 63071 Offenbach (DE); Bauer, Andreas, 63936 Schneeberg (DE); Wachter, Gerhard, 63654 Büdingen (DE)
(74) Vertreter: Knoblauch, Andreas

(56) Entgegenhaltungen:
- US-A- 5 423 577
- US-A- 5 542 716
- US-A- 5 951 063
- PATENT ABSTRACTS OF JAPAN vol. 1996, no. 02, 29. Februar 1996 (1996-02-29) & JP 07 260073 A (SHOWA ALUM CORP;OTHERS: 01), 13. Oktober 1995 (1995-10-13)

## Beschreibung

Die Erfindung bezieht sich auf eine Aufnahme-Kupplungsvorrichtung einer Steckkupplung mit zwei zusammensteckbaren, rohrförmigen Kupplungsteilen, einem Einsteck-Kupplungsteil mit einer umlaufenden Halterippe und einem der Aufnahme des Einsteck-Kupplungsteils dienenden Aufnahme-Kupplungsteil aus Metall, zum Verbinden zweier ein Fluid führender Bauteile, wobei die Aufnahme-Kupplungsvorrichtung aufweist: das Aufnahme-Kupplungsteil, das mit seitlichen Öffnungen und einem etwa U-förmigen elastischen Haltebügel versehen ist, dessen Schenkel durch die Öffnungen ragen und beim Zusammenstecken der Kupplungsteile hinter der Halterippe einrasten; wenigstens einen Dichtring und eine mit ihrem einen Ende dem Dichtring zugekehrte Sicherungsbuchse im Aufnahme-Kupplungsteil, die im zusammengesteckten Zustand der Kupplungsteile auf der Halterippe aufliegt.

Ferner betrifft die Erfindung eine Steckkupplung mit einer erfindungsgemäßen Aufnahme-Kupplungsvorrichtung.

Bei einer bekannten Aufnahme-Kupplungsvorrichtung jener Art (DE 31 43 015 C3) hat die Ausbildung des Aufnahme-Kupplungsteils aus Metall den Vorteil, daß es sich leichter, z.B. durch Schweißen oder Löten, mit einem der das Fluid führenden Bauteile aus Metall verbinden läßt und sowohl das Aufnahme-Kupplungsteil als auch das angeschlossene Bauteil eine geringere Permeation für umweltschädliche Fluide, wie Kraftstoff oder Öl bei einem Kraftfahrzeug, sicherstellt. Die das Verschieben des Dichtrings (oder der Dichtringe) im Aufnahme-Kupplungsteil verhindernde Sicherungsbuchse erstreckt sich jedoch nur zwischen dem Dichtring und der Umfangskante der Halterippe. Im zusammengesteckten Zustand der Kupplungsteile ergibt sich daher ein verhältnismäßig großer radialer Abstand zwischen dem Einsteck-Kupplungsteil und der den größten Durchmesser aufweisenden Innenseite des Aufnahme-Kupplungsteils an dessen Einführungsende. Bei radialer Belastung der Steckkupplung, z.B. infolge einer Verbiegung daran angeschlossener Bauteile in Form flexibler Leitungen, sei es bei einer Verlegung der Leitungen oder durch stärkere Erschütterungen oder Stöße, können sich die beiden Kupplungsteile verhältnismäßig weit relativ zueinander auslenken, so daß die Gefahr einer Undichtigkeit der durch die Steckkupplung bewirkten Verbindung besteht, insbesondere wenn die Elastizität des Dichtrings, bei dem es sich zumeist um einen O-Ring handelt, im Laufe der Zeit nachläßt. Dieser Abstand muß insbesondere auch deshalb verhältnismäßig groß gewählt sein, damit die Schenkel des Haltebügels, die durch jeweils zwei, insgesamt mithin vier, Öffnungen im Aufnahme-Kupplungsteil hindurchgeführt werden und mit radial nach außen vorspringenden Rastnasen (Bärten) hinter jeweils eine Kante zweier Öffnungen greifen, zwecks Entkupplung an ihren freien Enden zusammengedrückt werden können, so daß die Rastnasen und Öffnungen außer Eingriff gelangen und der Haltebügel aus den Öffnungen herausgezogen werden kann, um anschließend das Einsteck-Kupplungsteil aus dem Aufnahme-Kupplungsteil herausziehen zu können. Die Schenkel des Haltebügels dürfen daher im zusammengesteckten eingekuppelten Zustand nicht am Umfang des Einsteck-Kupplungsteils anliegen, müssen aber dennoch die Haltegerippe hintergreifen, was bedeutet, daß die Halterippe einen verhältnismäßig großen Außendurchmesser aufweisen muß, der wiederum einen entsprechend größeren Innendurchmesser des Aufnahme-Kupplungsteils bedingt. Das Aufnahme-Kupplungsteil ist daher entsprechend materialaufwendig. Darüber hinaus ist das Entkuppeln schwierig, weil die Schenkel des Haltebügels nur so weit zusammengedrückt werden dürfen, daß zwar die Rastnasen und die Öffnungen außer Eingriff gelangen, die Schenkel aber nicht fest am Umfang des Einsteck-Kupplungsteils anliegen und damit das Herausziehen des Haltebügels aus den Öffnungen zumindest behindern, wenn nicht sogar verhindern würden.

Eine gattungsgemäβ Aufnahme-kupplungvorrichtung einer Steckkupplung ist aus US-A-5951063 bekannt.

Der Erfindung liegt die Aufgabe zugrunde, eine Aufnahme-Kupplungsvorrichtung der eingangs genannten Art und eine damit versehene Steckkupplung anzugeben, die im eingebauten Zustand eine zuverlässigere Dichtigkeit bei geringerem Materialaufwand gewährleisten und beim Ein-und Auskuppeln eine einfachere Handhabung ermöglichen.

Erfindungsgemäß ist zur Lösung dieser Aufgabe vorgesehen, daß sich die Sicherungsbuchse über diese Schlitze hinaus erstreckt und mit zwei sich quer zu ihr erstreckenden Schlitzen versehen ist, durch die sich die Schenkel des Haltebügels ebenfalls in Längsrichtung dieser Schlitze erstrecken.

Da sich die Sicherungs-buchse axial über einen größeren Abschnitt des Aufnahme-Kupplungsteils erstreckt, ist der Zwischenraum zwischen Aufnahme-Kupplungsteil und Einsteck-Kupplungsteil über eine größere axiale Länge durch die Sicherungsbuchse ausgefüllt und dementsprechend der Abstand zwischen Sicherungsbuchse und Einsteck-Kupplungsteil über einen axial längeren Bereich kleiner, so daß Aufnahme- und Einsteck-Kupplungsteil bei einer radialen Belastung der Steckkupplung weniger weit relativ zueinander ausgelenkt werden können. Die Dichtigkeit der Steckkupplung ist daher in höherem Maße gewährleistet.

Vorzugsweise ist dafür gesorgt, daß die Sicherungsbuchse mit einem über den Umfang des Aufnahme-Kupplungsteils an dessen freien Ende hinausragen Flansch versehen ist. Dadurch ergibt sich zum einen über einen noch längeren Bereich ein geringerer Abstand zwischen Sicherungsbuchse und Einsteck-Kupplungsteil. Zum anderen verhindert der Flansch im eingekuppelten Zustand weitgehend eine unbeabsichtigte Berührung des Haltebügels in Richtung der Einführung des Einsteck-Kupplungsteils in das Aufnahme-Kupplungsteil, z.B. während des Transports, so daß ein Lösen des Haltebügels auf diese Weise weitgehend verhindert wird. Darüber hinaus ermöglicht der Flansch bei herausgezogenem Haltebügel ein einfaches Herausziehen der Sicherungsbuchse aus dem Aufnahme-Kupplungsteil, um den Dichtring oder die Dichtringe auszuwechseln.

Eine mögliche Ausgestaltung besteht sodann darin, daß der Flansch zwei radiale Aussparungen aufweist, deren Boden einen zur Längsmittelachse des Aufnahme-Kupplungsteils koaxialen Umfangsabschnitt mit größerem Außendurchmesser als der des Aufnahme-Kupplungsteils und eine daran angrenzende radiale Vertiefung in Umfangsrichtung an einer Wand der Aussparung aufweist und daß die Schenkel des Haltebügels an ihren Enden mit axialen Vorsprüngen versehen sind, die in die Aussparungen ragen und im zusammengesteckten Zustand der Kupplungsteile auf dem koaxialen Umfangsabschnitt aufliegen und zum Entkuppeln durch radiales Bewegen des Haltebügels in den Vertiefungen einrastbar sind. Aufgrund dieser Ausgestaltung ist das Entkuppeln mit einer einfachen radialen Bewegung des Haltebügels möglich. Bei dieser Bewegung gleiten die Vorsprünge der Schenkelenden auf den Umfangsabschnitten der Aussparungen unter gleichzeitiger Aufspreizung der Schenkel bis zur Einrastung in den Vertiefungen entlangt, wobei sie sich gleichzeitig an der Wand der Aussparung anlegen. Durch das Aufspreizen der Schenkel kommen diese mit der Halterippe außer Eingriff. Das Einsteck-Kupplungsteil kann daher aus dem Aufnahme-Kupplungsteil herauszogen werden. Gleichzeitig wird jedoch die radiale Bewegung durch das Anschlagen der Vorsprünge der Schenkelenden an den Wänden der Aussparungen begrenzt, so daß der Haltebügel nicht radial vom Aufnahme-Kupplungsteil abgezogen werden kann und gegebenenfalls verloren geht.

Sodann können die Aussparungen zum freien Ende der Sicherungsbuchse hin geschlossen sein. Der Haltebügel ist daher auch über den Umfangsbereich der Aussparungen nicht in Richtung der Einführung des Einsteck-Kupplungsteils in das Aufnahme-Kupplungsteil zugänglich.

Ferner kann dafür gesorgt sein, daß der Flansch in seinem dem Querteil des Haltebügels gegenüberliegenden Bereich eine radiale Aussparung aufweist. Diese Aussparung erleichtert die Einführung eines Werkzeugs, wie eines Schraubendrehers, unter das Querteil des Haltebügels, um diesen zwecks Entkupplung radial zu bewegen.

Der Flansch kann ferner wenigstens einen axialen Vorsprung aufweisen, der in eine Nut im freien Ende des Aufnahme-Kupplungsteils eingreift. Dadurch ist sichergestellt, daß beim Zusammenstecken von Aufnahme-Kupplungsteil und Sicherungsbuchse eine vorbestimmte relative Drehwinkellage beider Teile eingehalten wird, in der ihre Schlitze miteinander fluchten.

Vorzugsweise besteht die Sicherungsbuchse aus hartem Kunststoff und der Haltebügel aus hart-elastischem Kunststoff. Dies ermöglicht eine rasche Herstellung der beiden Teile in großen Stückzahlen pro Zeiteinheit.

Sodann können die Schenkel des Haltebügels an ihren einander zugekehrten Seiten eine sich zur Einführungsöffnung der Sicherungsbuchse hin erweiternde Abschrägung aufweisen. Diese Abschrägung erleichtert das Einführen des Einsteck-Kupplungsteils in das Aufnahme-Kupplungsteil, bis die Halterippe hinter den Schenkeln des Haltebügels einrastet.

Ferner ist es von Vorteil, wenn das Einsteck-Kupplungsteil bei einer Steckkupplung mit der erfindungsgemäßen Aufnahme-Kupplungsvorrichtung einen Ringwulst aufweist, der im zusammengesteckten Zustand der Kupplungsteile innerhalb der Sicherungsbuchse und in einem größeren Abstand von dem Dichtring als die Halterippe liegt, so daß die Schenkel des Haltebügels zwischen der Halterippe und dem Ringwulst eingreifen, und der Außendurchmesser des Ringwulstes weitgehend dem größten Innendurchmesser der Sicherungsbuchse entspricht. Das Einsteck-Kupplungsteil kann sich dann bei einer radialen Belastung der Steckkupplung über den Ringwulst an der Innenseite der Sicherungsbuchse abstützen. Dies verhindert mit noch höherer Sicherheit eine relative Abwinklung der beiden Kupplungsteile.

Die Erfindung und ihre Weiterbildungen werden nachstehend anhand der beiliegenden Zeichnungen eines bevorzugten Ausführungsbeispiels näher beschrieben. Es zeigen:
- Fig. 1: eine perspektivische Ansicht eines Ausführungsbeispiels der erfindungsgemäßen Aufnahme-Kupplungsvorrichtung in einer Lage, in der ein Haltebügel der Aufnahme-Kupplungsvorrichtung seine Entkupplungslage einnimmt,
- Fig. 2: eine andere perspektivische Ansicht der in Fig. 1 dargestellten Aufnahme-Kupplungsvorrichtung, in der ihr Haltebügel die Kupplungslage einnimmt,
- Fig. 3: die Aufnahme-Kupplungsovrrichtung im Einkupplungszustand des Haltebügels, jedoch in einer gegenüber Fig. 2 um 180 Grad gedrehten Lage,
- Fig. 4: einen Axialschnitt durch die Aufnahme-Kupplungsvorrichtung nach Fig. 3 und
- Fig. 5: einen Axialschnitt durch die Aufnahme-Kupplungsvorrichtung nach Fig. 2.

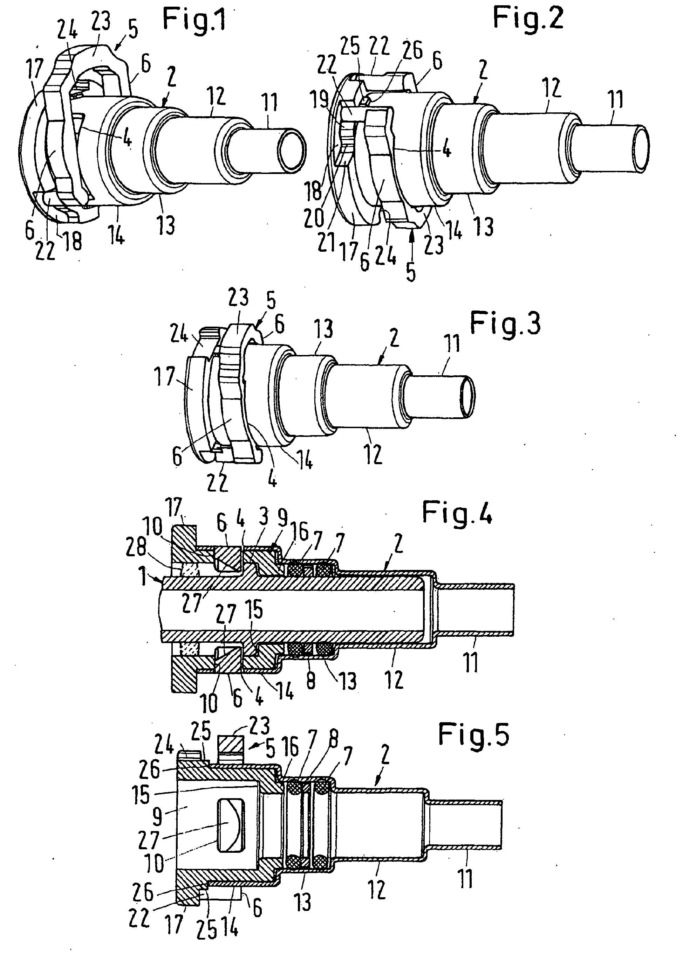

Die Aufnahme-Kupplungsvorrichtung nach den Fig. 1 bis 5 bildet einen Teil einer Steckkupplung mit zwei zusammensteckbaren, rohrförmigen Kupplungsteilen, nämlich einem Einsteck-Kupplungsteil 1 und einem der Aufnahme des Einsteck-Kupplungsteils 1 dienenden Aufnahme-Kupplungsteil 2, zum Verbinden zweier ein Fluid führender, nicht dargestellter Bauteile, z.B. einer am freien Ende des Aufnahme-Kupplungsteils 2 anschließbaren flexiblen Fluidleitung, vorzugsweise aus Metall in Form eines Wellrohres, und einer am Einsteck-Kupplungsteil 1 anschließbaren Fluidleitung. Alternativ kann das Einsteck-Kupplungsteil 1 auch einen Anschlußstutzen eines mit dem Fluid zu versorgenden Bauteils, wie dem Gehäuse des Kühlers eines Kraftfahrzeugs,bilden. Im dargestellten Ausführungsbeispiel besteht das Einsteck-Kupplungsteil 1 aus hartem Kunststoff, es kann aber auch aus Metall bestehen. Ferner ist es mit einer außen umlaufenden Halterippe 3 versehen.

Das Aufnahme-Kupplungsteil 2 ist mit zwei seitlichen, sich diametral in Bezug auf das Aufnahme-Kupplungsteil 2 gegenüberliegenden und quer, etwa wie eine Kreissehne, zum Aufnahme-Kupplungsteil 2 erstreckenden Öffnungen 4 in Form von Schlitzen und einem etwa U-förmigen elastischen Haltebügel 5 versehen, dessen Schenkel 6 durch die Öffnungen 4 ragen und beim Zusammenstecken der Kupplungsteile 1, 2 hinter der Halterippe 3 einrasten. Ferner enthält die Aufnahme-Kupplungsvorrichtung wenigstens einen Dichtring 7, hier zwei Dichtringe 7, die durch einen Abstandsring 8 getrennt sind, und eine mit ihrem einen Ende dem einen Dichtring 7 zugekehrte Sicherungsbuchse 9 im Aufnahme-Kupplungsteil 2, die im zusammengesteckten Zustand der Kupplungsteile 1, 2 auf der Halterippe 3 aufliegt und sich über die Schlitze 4 hinaus erstreckt. Auch die Sicherungsbuchse hat zwei sich diametral gegenüberliegende und quer zu ihr erstreckende Schlitze 10, die mit den Schlitzen 4 fluchten. Die Schenkel 6 des Haltebügels 5 erstrecken sich jeweils nicht nur in Längsrichtung durch die Schlitze 4, sondern auch durch die Schlitze 10, so daß sie, abgesehen von ihrer Rückstellfederkraft, ungehindert radial nach außen gespreizt werden können.

Das Aufnahme-Kupplungsteil 2 hat vier Abschnitte 11, 12, 13 und 14 mit unterschiedlichen Durchmessern, die in der Reihenfolge der Abschnitte 11 bis 14 zunehmen. Der Innendurchmesser des Abschnitts 11 entspricht dem Innendurchmesser des Einsteck-Kupplungsteils 1, der Innendurchmesser des Abschnitts 12 dem Außendurchmesser des Einsteck-Kupplungsteils 1, der radiale Abstand des Abschnitts 13 vom Außenumfang des Einsteck-Kupplungsteils 1 der radialen Dicke der nach dem Zusammenstecken der Kupplungsteile 1, 2 verformten Dichtringe 7, der Innendurchmesser des Abschnitts 14 dem Außendurchmesser der Sicherungsbuchse 9 und der Innendurchmesser der Sicherungsbuchse 9 im Bereich des Haltebügels 5 bzw. seiner Schenkel 6 dem Außendurchmesser der Halterippe 3. Die Halterippe 3 liegt im eingesteckten Zustand des Einsteck-Kupplungsteils 1 an einer radial nach innen vorstehenden Schulter 15 der Sicherungsbuchse 9 an, und ein axialer ringförmiger Fortsatz 16 in der Sicherungbuchse 9 erstreckt sich in den die Dichtungen 7 und den Abstandsring 8 aufnehmenden Ringraum zwischen dem Abschnitt 12 des Aufnahme-Kupplungsteils 2 und dem Einsteck-Kupplungsteil 1. Die radiale Dicke des Fortsatzes 16 entspricht hierbei etwa der radialen Dicke dieses Ringraums.

Die Sicherungsbuchse 9 ist mit einem über den Umfang des Aufnahme-Klupplungsteils 2 an dessen freien Ende hinausragenden Flansch 17 versehen, um zu verhindern, daß der Haltebügel 5 in seiner mit der Halterippe 3 in Eingriff gebrachten Lage nach den Figur. 2 bis 4 in Richtung der Einführung des Einsteck-Kupplungteils 1 in das Aufnahme-Kupplungsteil 2 (von links in den Fig. 1 bis 5) ohne weiteres zugänglich ist, um die Gefahr eines unabsichtlichen Entkuppelns, z.B. während des Transports, durch Ausübung einer axialen Kraft in dieser Richtung auf den Haltebügel 5 weitgehend zu vermeiden.

Der Flansch 17 hat ferner zwei radiale Aussparungen 18, deren Boden einen zur Längsmittelachse des Aufnahme-Kupplungsteils 2 koaxialen Umfangsabschnitt 19 mit grö-βerem Außendurchmesser als der des Aufnahme-Kupplungsteils 2 und eine in Umfangsrichtung daran angrenzende radiale Vertiefung 20 an einer Wand 21 der Aussparung 18 aufweist. Die Schenkel 6 des Haltebügels 5 sind an ihren Enden mit axialen Vorsprüngen 22 versehen, die in die Aussparungen 18 ragen und im zusammengesteckten Zustand der Kupplungsteile 1, 2 nach Fig. 4 auf dem koaxialen Umfangsabschnitt 19 aufliegen und zum Entkuppeln durch radiales Bewegen des Haltebügels 5 in den Vertiefungen 20 einrastbar sind. Die Aussparungen 18 sind zum freien Ende der Sicherungsbuchse 9 hin geschlossen. Der Flansch 17 hat zumindest neben dem Querteil 23 des Haltebügels 5 eine radiale Aussparung 24. Ferner hat der Flansch 17 wenigstens einen axialen Vorsprung 25, der in eine Nut 26 im einsteckseitigen Ende des Aufnahme-Kupplungsteils 2 eingreift.

Die Schenkel 6 des Haltebügels 5 weisen an ihren einander zugekehrten Seiten jeweils eine sich zur Einführungsöffnung der Sicherungsbuchse 9 hin erweiternde Abschrägung 27 auf.

Die Sicherungsbuchse 9 besteht aus hartem Kunststoff und der Haltebügel 5 aus hart-elastischem Kunststoff.

Zusätzlich kann das Einsteck-Kupplungsteil 1 einen Ringwulst 28 aufweisen, der im zusammengesteckten Zustand der Kupplungsteile 1, 2 innerhalb der Sicherungsbuchse 9 und in einem größeren Abstand von dem Dichtring 7 oder den Dichtringen 7 als die Halterippe 3 liegt. Die Schenkel 6 des Haltebügels 5 greifen dann zwischen der Halterippe 3 und dem Ringwulst 28 ein. Der Außendurchmesser des Ringwulstes 28 entspricht weitgehend dem größten Innendurchmesser der Sicherungsbuchse 9.

Um die Kupplungsteile 1, 2 und damit die an ihnen befestigten Bauteile zu verbinden, wird zunächst der Haltebügel 5 in die Einkupplungslage nach den Fig. 2 bis 4 gebracht, in der seine Schenkel 6 radial nach innen vorstehen, wie es in Fig. 4 dargestellt ist, und die Vorsprünge 22 an den Enden der Schenkel 6 auf den Umfangsabschnitten 19 am Boden der Aussparungen 18 anliegen, wie es in Fig. 2 dargestellt ist. Danach wird das Einsteck-Kuppulungsteil 1 bis in den Abschnitt 12 des Aufnahme-Kupplungsteils 2 eingeführt, wobei die Halterippe 3 über die Abschrägungen 27 an den Innenseiten der Schenkel 6 des Haltebügels 5 unter Aufspreizung der Schenkel 6 hinweggleitet, bis sie an der Schulter 15 der Sicherungsbuchse 9 anschlägt und die Schenkel 6 wieder in die in Fig. 4 dargestellte Lage zurückfedern, in der die Halterippe 3 hinter den Schenkeln 6 eingerastet ist. Da die Schenkel 6 sowohl die Schlitze 4 des Aufnahme-Kupplungsteils 2 als auch die Schlitze 10 der Sicherungsbuchse 9 radial durchsetzen, werden nicht nur die Kupplungsteile 1, 2, sondern auch die Sicherungsbuchse 9 und das Aufnahme-Kupplungsteil 2 miteinander verbunden. Der radiale Abstand zwischen der Innenseite der Sicherungsbuchse 9 und dem eingesteckten Einsteck-Kupplungsteil 1 und der Außendurchmesser der Halterippe 3 des Aufnahme-Kupplungsteils 2 können verhältnismäßig gering gehalten sein, weil die Schenkel 6 zum Entkuppeln nicht zunächst radial nach innen gedrückt werden müssen (wie im bekannten Fall), so daß ein nennenswertes Spiel zwischen den Schenkeln 6 und der Außenseite des Einsteck-Kupplungsteils 1 entfallen kann (der dargestellte Maßstab beträgt etwa das Doppelte der Wirklichkeit). Dadurch kann zum einen einer Auslenkung der beiden Kupplungsteile 1, 2 relativ zueinander aufgrund einer radialen Belastung der Steckkupplung stärker entgegengewirkt werden, insbesondere dann, wenn das Einsteck-Kupplungsteil mit dem zusätzlichen Ringwulst 28 versehen ist, und zum anderen das Einsteck-Kupplungsteil 1 beim Einstecken in das Aufnahme-Kupplungsteil 2 über einen axial längeren Weg mit seiner Halterippe 3 an der Innenseite der Sicherungsbuchse 9 geführt werden, ohne zu verkanten, so daß die Halterippe 3 sicher hinter den Schenkel 6 des Haltebügels 5 einrastet. Zur Entkupplung der Kupplungsteile 1, 2 kann mittels eines flachen Werkzeugs, z.B. der Klinge eines Schraubendrehers, das Querteil 23 durch die Aussparung 24 im Flansch 17 hindurch untergriffen und radial relativ zum Aufnahme-Kupplungsteil 2 verschoben werden, wobei die Vorsprünge 22 an den Ende der Schenkel 6 auf den Umfangsabschnitten 19 unter Aufweitung der Schenkel 6 bis zur Anlage an jeweils einer der Wände 21 der Aussparungen 18 entlanggleiten, wonach sie in den Vertiefungen 20 einrasten und dann diese Lage beibehalten, ohne daß der Haltebügel 5 von dem Aufnahme-Kupplungsteil 2 gelöst würde. Danach kann das Einsteck-Kupplungsteil 1 aus dem Aufnahme-Kupplungsteil 2 herausgezogen werden, da die Schenkel 6 nicht mehr radial auf der Innenseite der Sicherungsbuchse 9 vorstehen. In der Entkupplungslage des Haltebügels 5 nach den Fig. 1 und 5 greifen die Schenkel 6 auch nicht mehr in die Schlitze 10 der Sicherungsbuchse 9 ein, so daß gewünschtenfalls auch die Sicherungsbuchse 9 aus dem Aufnahme-Kupplungsteil 2 herausgezogen werden kann, indem einfach der Flansch 7 erfaßt wird und die Sicherungsbuchse 9 und das Aufnahme-Kupplungsteil 2 auseinandergezogen werden. Danach können dann nötigenfalls die Dichtringe 7 ausgewechselt werden.

Um sicherzustellen, daß beim Zusammenbau das Aufnahme-Kupplungsteil 2 und die Sicherungsbuchse 9 in der erforderlichen Drehwinkellage zusammengesteckt werden können, in der die Schlitze 4 und 10 miteinander fluchten, sind die Vorsprünge 25 und Nuten 26 vorgesehen, die in der erforderlichen relativen Drehwinkellage der beiden Teile 2 und 9 zusammenpassen.

Um den Haltebügel 5 auf dem Aufnahme-Kupplungsteil 2 zu montieren, braucht er lediglich zunächst rittlings auf dem Abschnitt 13 des Aufnahme-Kupplungsteils 2 aufgesetzt und dann axial zum Flansch 17 hin vorgeschoben zu werden, bis seine Vorsprünge 22 in die Aussparungen 18 eingreifen.

Daher ist nicht nur das Ein- und Auskuppeln der Steckkupplung, sondern auch die Montage und Demontage aller Elemente der Aufnahme-Kupplungsvorrichtung sehr einfach.

## Patentansprüche

1. Aufnahme-Kupplungsvorrichtung einer Steckkupplung mit zwei zusammensteckbaren, rohrförmigen Kupplungsteilen (1,2), einem Einsteck-Kupplungsteil (1) mit einer umlaufenden Halterippe (3) und einem der Aufnahme des Einsteck-Kupplungsteils (1) dienenden Aufnahme-Kupplungsteil (2) aus Metall, zum Verbinden zweier ein Fluid führender Bauteile, wobei die Aufnahme-Kupplungsvorrichtung aufweist: das Aufnahme-Kupplungsteil (2), das mit seitlichen Öffnungen (4) und einem etwa U-förmigen elastischen Haltebügel (5) versehen ist, dessen Schenkel (6) durch die Öffnungen (4) ragen und beim Zusammenstecken der Kupplungsteile (1,2) hinter der Halterippe (3) einrasten; wenigstens einen Dichtring (7) und eine mit ihrem einen Ende dem Dichtring (7) zugekehrte Sicherungsbuchse (9) im Aufnahme-Kupplungsteil (2), die im zusammengesteckten Zustand der Kupplungsteile (1,2) auf der Halterippe (3) aufliegt, wobei das Aufnahme-Kupplungsteil (2) nur zwei sich diametral in Bezug auf das Aufnahme-Kupplungsteil (2) gegenüberliegende und quer zu diesem erstreckende Öffnungen (4) in Form von Schlitzen aufweist, durch die sich jeweils einer der Schenkel (6) des Haltebügels (5) in deren Längsrichtung hindurch erstreckt, **dadurch gekennzeichnet daß** sich die Sicherungsbuchse (9) über diese Schlitze (4) hinaus erstreckt und mit zwei sich quer zu ihr erstreckenden Schlitzen (10) versehen ist, durch die sich die Schenkel (6) des Haltebügels (5) ebenfalls in Längsrichtung dieser Schlitze (10) erstrecken.

2. Aufnahme-Kupplungsvorrichtung nach Anspruch 1, **dadurch gekennzeichnet, daß** die Sicherungsbuchse (9) mit einem über den Umfang des Aufnahme-Kupplungsteils (2) an dessen freien Ende hinausragen Flansch (17) versehen ist

3. Aufnahme-Kupplungsvorrichtung nach Anspruch 2, **dadurch gekennzeichnet, daß** der Flansch (17) zwei radiale Aussparungen (18) aufweist, deren Boden einen zur Längsmittelachse des Aufnahme-Kupplungsteils (2) koaxialen Umfangsabschnitt (19) mit grö-βerem Außendurchmesser als der des Aufnahme-Kupplungsteils (2) und eine in Umfangsrichtung daran angrenzende radiale Vertiefung (20) an einer Wand (21) der Aussparung (18) aufweist, und daß die Schenkel (6) des Haltebügels (5) an ihren Enden mit axialen Vorsprüngen (22) versehen sind, die in die Aussparungen (18) ragen und im zusammengesteckten Zustand der Kupplungsteile (1,2) auf dem koaxialen Umfangsabschnitt (19) aufliegen und zum Entkuppeln durch radiales Bewegen des Haltebügels (5) in den Vertiefungen (20) einrastbar sind.

4. Aufnahme-Kupplugsvorrichtung nach Anspruch 3, **dadurch gekennzeichnet, daß** die Aussparungen (18) zum freien Ende der Sicherungsbuchse (9) hin geschlossen sind.

5. Aufnahme-Kupplungsvorrichtung nach einem der Ansprüche 2 bis 3, **dadurch gekennzeichnet, daß** der Flansch (17) in seinem dem Querteil (23) des Haltebügels (5) gegenüberliegenden Bereich eine radiale Aussparung (24) aufweist.

6. Aufnahme-Kupplungsvorrichtung nach einem der Ansprüche 2 bis 5, **dadurch gekennzeichnet, daß** der Flansch (17) wenigstens einen axialen Vorsprung (25) aufweist, der in eine Nut (26) im freien Ende des Aufnahme-Kupplungsteils (2) eingreift.

7. Aufnahme-Kupplungsvorrichtung nach einem der Ansprüche 1 bis 6, **dadurch gekennzeichnet, daß** die Sicherungsbuchse (9) aus hartem Kunststoff besteht.

8. Aufnahme-Kupplungsvorrichtung nach einem der Ansprüche 1 bis 7, **dadurch gekennzeichnet, daß** der Haltebügel (5) aus hartelastischem Kunststoff besteht.

9. Aufnahme-Kupplungsvorrichtung nach einem der Ansprüche 1 bis 8, **dadurch gekennzeichnet, daß** die Schenkel (6) des Haltebügels (5) an ihren einander zugekehrten Seiten eine sich zur Einführungsöffnung der Sicherungsbuchse (9) hin erweiternde Abschrägung (27) aufweisen.

10. Steckkupplung mit einer Aufnahme-Kupplungsvorrichtung nach einem der Ansprüche 1 bis 9, und einem Einstek-Kupplungsteil (1) mit einer umlaufenden Halterippe (3) **dadurch gekennzeichnet, daß** das Einsteck-Kupplungsteil (1) einen Ringwulst (28) aufweist, der im zusammengesteckten Zustand der Kupplungsteile (1,2) innerhalb der Sicherungs-buchse (9) und in einem größeren Abstand von dem Dichtring (7) als die Halterippe (3) liegt, so daß die Schenkel (6) des Haltebügels (5) zwischen der Halterippe (3) und dem Ringwulst (28) eingreifen, und daß der Außendurchmesser des Ringwulstes (28) weitgehend dem größten Innendurchmesser der Sicherungsbuchse (9) entspricht.

## Claims

1. Receiving coupling device of a plug-in coupling with two tubular coupling parts (1, 2) insertable into one another, i.e., a coupling insert (1) with a peripherally extending securing rib (3) and a coupling receptacle (2) of metal for receiving the coupling insert, for the purpose of connecting two components conveying a fluid, wherein the receiving coupling device comprises: the coupling receptacle (2) having lateral openings (4) and a substantially U-shaped, elastic securing bracket (5), the legs (6) of which project through the openings (4) and snap into place behind the securing rib (3) when inserting the coupling parts (1, 2) into one another; at least one sealing ring (7) and a securing bushing (9) in the coupling receptacle (2), the bushing facing with one end the sealing ring (7) and resting in the inserted state of the coupling parts (1, 2) on the securing rib (3); wherein the coupling receptacle (2) has only two openings (4) positioned diametrically oppositely to one another relative to the coupling receptacle (2) and extending transversely thereto, which openings are in the form of slots, through which one leg (6) of the securing bracket (5) extends in its longitudinal direction, respectively; **characterised in that** the securing bushing (9) extends past these slots (4) and is provided with two slots (10) extending transversely to the securing bushing, through which slots (10) the legs (6) of the securing bracket (5) also extend in the longitudinal direction of these slots (10).

2. Coupling device according to claim 1, **characterised in that** the securing bushing (9) has a flange (17) projecting radially outwardly past an outer circumference of the coupling receptacle (2) at its free end.

3. Coupling device according to claim 2, **characterised in that** the flange (17) has two radial cutouts (18), the bottom of which has a peripheral section (19), coaxially arranged to the longitudinal center axis of the coupling receptacle (2) and having a greater outer diameter than the coupling receptacle (2), and further has a radial depression (20) adjoining the peripheral section (19) in the circumferential direction and being located at a sidewall (21) of the cutout (18), and that the two legs (6) of the securing bracket (5) are provided at their ends with axial projections (22) which project in the coupling position into the radial cutouts (18) and, in the inserted state of the coupling parts (1, 2), rest against the coaxial peripheral section (19), wherein, for decoupling the coupling insert (1) and the coupling receptacle (2) from one another, the axial projections (22) snap into place in the radial depressions (20) by moving the securing bracket (5) radially.

4. Coupling device according to claim 3, **characterised in that** the radial cutouts (18) are closed in a direction toward the free end of the securing bushing (9).

5. Coupling device according to any of the claims 2 to 3, **characterised in that** the flange (17) has a radial recess (24) in its area located opposite the transverse member (23) of the securing bracket (5).

6. Coupling device according to any of the claims 2 to 5, **characterised in that** the flange (17) has at least one axial projection (25) which engages a groove (26) at the free end of the coupling receptacle (2).

7. Coupling device according to any of the claims 1 to 6, **characterised in that** the securing bushing (9) consists of hard plastic material.

8. Coupling device according to any of the claims 1 to 7, **characterised in that** the securing bracket (5) consists of hard-elastic plastic material.

9. Coupling device according to any of the claims 1 to 8, **characterised in that** the legs (6) of the securing bracket (5) have at inner sides facing one another a slant (27) widening in a direction toward the receiving end of the coupling receptacle (2).

10. Plug-in coupling comprising a coupling device according to any of the claims 1 to 9 and a coupling insert (1), **characterised in that** the coupling insert (1) comprises an annular bead (28) which, in the coupling position of the coupling parts (1, 2), is positioned in the securing bushing (9) at a greater spacing from the sealing ring (7) than the securing rib (3), so that the legs (6) of the securing bracket (5) engage between the securing rib (3) and the annular bead (28), and that the outer diameter of the annular bead (28) corresponds substantially to the largest inner diameter of the securing bushing (9).

## Revendications

1. Dispositif d'accouplement à logement dans un accouplement à enfichage comprenant deux parties d'accouplement (1, 2) de forme tubulaire susceptible d'être enfichées l'une avec l'autre, à savoir une partie d'accouplement enfichable (1) avec une nervure de maintien périphérique (3) et une partie d'accouplement à logement (2) servant à recevoir la partie d'accouplement enfichable (1), en métal, pour la liaison de deux composants conduisant un fluide, dans lequel le dispositif d'accouplement à logement comprend :
la partie d'accouplement à logement (2), qui est dotée d'ouvertures latérales (4) et d'un étrier de maintien élastique (5) approximativement en forme de U, dont les bras (6) passent à travers les ouvertures (4) et s'enclenchent derrière la nervure de maintien (3) lors de l'enfichage mutuel des parties d'accouplement (1, 2) ; et
au moins une bague d'étanchement (7) et une douille de blocage (9), tournée vers la bague d'étanchement (7) par l'une de ses extrémités, dans la partie d'accouplement à logement (2), qui s'appuie contre la nervure de maintien (3) dans l'état mutuellement enfiché des parties d'accouplement (1, 2),
dans lequel la partie d'accouplement à logement (2) présente uniquement deux ouvertures (4), sous forme de fentes, qui sont diamétralement opposées par rapport à la partie d'accouplement à logement (2) et qui s'étendent transversalement à celle-ci, telles que l'une des branches (6) de l'étrier de maintien (5) s'étend en traversant une ouverture respective dans sa direction longitudinale,
**caractérisé en ce que** la douille de blocage (9) s'étend au-delà de ces fentes (4) et est pourvue de deux fentes (17) s'étendant transversalement à elle-même, à travers lesquelles s'étendent les branches (6) de l'étrier de maintien (5) également en direction longitudinale de ces fentes (10).

2. Dispositif d'accouplement à logement selon la revendication 1, **caractérisé en ce que** la douille de blocage (9) est dotée d'une bride (17) qui dépasse au-delà de la périphérie de la partie d'accouplement à logement (2) à son extrémité libre.

3. Dispositif d'accouplement à logement selon la revendication 2, **caractérisé en ce que** la bride (17) comprend deux évidements radiaux (18) dont les fonds présentent un tronçon périphérique (19) coaxial à l'axe médian longitudinal de la partie d'accouplement à logement (2) avec un diamètre plus grand que celui de la partie d'accouplement à logement (2), et un renfoncement radial (20) qui s'y raccorde en direction périphérique, sur une paroi (21) de l'évidement (18), et **en ce que** les branches (6) de l'étrier de maintien (5) sont dotés à leurs extrémités de saillies axiales (22) qui pénètrent dans les évidements (18) et qui, à l'état conjointement enfiché des parties d'accouplement (1, 2), s'appuient sur le tronçon périphérique coaxial (19) et sont susceptibles de s'enclencher dans les évidements (20) par déplacement radial de l'étrier de maintien (5) pour le découplage.

4. Dispositif d'accouplement à logement selon la revendication 3, **caractérisé en ce que** les évidements (18) sont fermés vers l'extrémité libre de la douille de blocage (9).

5. Dispositif d'accouplement à logement selon l'une des revendications 2 et 3, **caractérisé en ce que** la bride (17) présente un évidement radial (24) dans sa région opposée à la partie transversale (23) de l'étrier de maintien (5).

6. Dispositif d'accouplement à logement selon l'une des revendications 2 à 5, **caractérisé en ce que** la bride (17) comporte au moins une saillie axiale (25) qui s'engage dans une gorge (26) dans l'extrémité libre de la partie d'accouplement à logement (2).

7. Dispositif d'accouplement à logement selon l'une des revendications 1 à 6, **caractérisé en ce que** la douille de blocage (9) est en matière plastique dure.

8. Dispositif d'accouplement à logement selon l'une des revendications 1 à 7, **caractérisé en ce que** l'étrier de maintien (5) et en matière plastique élastique dure.

9. Dispositif d'accouplement à logement selon l'une des revendications 1 à 8, **caractérisé en ce que** les branches (6) de l'étrier de maintien (5) présentent sur leurs côtés tournés l'un vers l'autre un biseau (27) qui s'élargit en direction de l'ouverture d'introduction de la douille de blocage (9).

10. Accouplement à enfichage comprenant un dispositif d'accouplement à logement selon l'une des revendications 1 à 9, et une partie d'accouplement enfichable (1) avec une nervure de maintien périphérique (3), **caractérisé en ce que** la partie d'accouplement enfichable (1) comprend un bourrelet annulaire (28) qui, dans l'état enfiché des parties d'accouplement (1, 2) se trouve à l'intérieur de la douille de blocage (9) et à une distance depuis la bague d'étanchement (7) plus grande que la nervure de maintien (3), de sorte que les branches (6) de l'étrier de maintien (5) s'engagent entre la nervure de maintien (3) et le bourrelet annulaire (28), et **en ce que** le diamètre extérieur du bourrelet annulaire (28) correspond largement au plus grand diamètre intérieur de la douille de blocage (9).
